(19) Europäisches Patentamt / European Patent Office / Office européen des brevets

(11) **EP 4 538 733 A1**

(12) **EUROPEAN PATENT APPLICATION**

(43) Date of publication:
**16.04.2025 Bulletin 2025/16**

(21) Application number: **24203599.6**

(22) Date of filing: **30.09.2024**

(51) International Patent Classification (IPC):
**G01S 7/02** *(2006.01)*     **G01S 7/35** *(2006.01)*
**G01S 13/34** *(2006.01)*    **G01S 13/931** *(2020.01)*
**G01S 13/42** *(2006.01)*

(52) Cooperative Patent Classification (CPC):
**G01S 7/0233; G01S 7/0234; G01S 7/0235;
G01S 7/356; G01S 13/343; G01S 13/42;
G01S 13/931;** G01S 2013/9315; G01S 2013/9321

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.10.2023 US 202318483115**

(71) Applicant: **NXP B.V.**
**5656 AG Eindhoven (NL)**

(72) Inventors:
• **Liu, Baokun**
**5656AG Eindhoven (NL)**
• **Wu, Ryan Haoyun**
**5656AG Eindhoven (NL)**

(74) Representative: **Hardingham, Christopher Mark**
**NXP Semiconductors**
**Intellectual Property Group**
**Abbey House**
**25 Clarendon Road**
**Redhill, Surrey RH1 1QZ (GB)**

(54) **HYBRID RANDOM TIME DIVISION MULTIPLEXING (RTDM) DOPPLER DIVISION MULTIPLEXING (DDM) MULTIPLE-INPUT MULTIPLE-OUTPUT (MIMO) RADAR SYSTEM AND METHOD**

(57) A radar system and methods of operating radar system are provided. The radar system includes transmitter groups, each including transmitter modules, configured to transmit multiple transmit signals in accordance with a Random Time Division Multiplexing (RTDM) - Doppler Domain Multiplexing (DDM) scheme, a receiver modules configured to receive reflections of the transmit signals reflected by at least one object and to generate digital signals based on the received reflections, and a controller that includes a signal processor configured to generate multiple range-Doppler antenna cubes (RDACs) based on the reflections of the plurality of transmit signals, each of the multiple RDACs corresponding to a respective transmitter group of the transmitter groups, generate a combined range-Doppler map (RDM) by integrating the multiple RDACs, and generate object position data based on the combined RDM.

FIG. 6

The flowchart (600) contains:
- RECEIVE RAW DATA FOR FIRST TX GROUP (602)
- RECEIVE RAW DATA FOR SECOND TX GROUP (608)
- PERFORM RANGE COMPRESSION (FAST-TIME FFT) TO GENERATE FIRST RCAC (604)
- PERFORM RANGE COMPRESSION (FAST-TIME FFT) TO GENERATE SECOND RCAC (610)
- PERFORM DOPPLER COMPRESSION (SLOW-TIME FFT) TO GENERATE FIRST RDAC (606)
- PERFORM DOPPLER COMPRESSION (SLOW-TIME FFT) TO GENERATE SECOND RDAC (612)
- PERFORM NON-COHERENT INTEGRATION OF THE FIRST RDAC AND SECOND RDAC TO GENERATE COMBINED RDM (614)
- PERFORM PEAK DETECTION (CFAR) (616)
- PERFORM DOPPLER DIAMBIGUATION WITH DECODER (618)
- CONTRUCT MIMO ARRAY (620)
- GENERATE TARGET OBJECT POSITION DATA USING AOA ESTIMATION (622)
- GENERATE TARGET OBJECT TRACKING DATA (624)

EP 4 538 733 A1

**Description**

TECHNICAL FIELD

Embodiments of the subject matter described herein relate generally to radar systems, including multiple-input multiple-output (MIMO) radar systems and associated methods.

BACKGROUND

Radar systems may be used to detect the range, velocity, and angle of nearby objects. With advances in technology, radar systems may now be applied in many different applications, such as automotive radar safety systems which increasingly use radar systems to detect changes to a surrounding environment, such as a proximity to another automobile for blind spot detection, or for detection of a leading vehicle for improved cruise control. Accurate radar detection is also integral to autonomous vehicle control systems. However, there are challenges with accurately detecting the position and movement of objects using radar systems that can be constructed on an automobile. A common method for improving the angular resolution of automotive radar systems uses multiple transmit and receive antennas to implement a Multiple-Input-Multiple-Output (MIMO) automotive radar system. In a MIMO radar system, a virtual array is formed with multiple array elements equal to a product of a number of transmit and receive antennas. The increased aperture of a MIMO radar compared to a single transmitter system increases the capability to separate objects based upon the Angle of Arrival (AoA) of signals reflected by those objects.

SUMMARY

A brief summary of various exemplary embodiments is presented below. Some simplifications and omissions may be made in the following summary, which is intended to highlight and introduce some aspects of the various exemplary embodiments, without limiting the scope. Detailed descriptions of an exemplary embodiment adequate to allow those of ordinary skill in the art to make and use these concepts will follow in later sections.

In an example embodiment, A brief summary of various exemplary embodiments is presented below. Some simplifications and omissions may be made in the following summary, which is intended to highlight and introduce some aspects of the various exemplary embodiments, without limiting the scope. Detailed descriptions of an exemplary embodiment adequate to allow those of ordinary skill in the art to make and use these concepts will follow in later sections.

In an example embodiment, a radar system includes multiple transmitter groups, each including multiple transmitter modules, configured to transmit a multiple transmit signals in accordance with a Random Time Division Multiplexing (RTDM) - Doppler Domain Multiplexing (DDM) scheme, multiple receiver modules configured to receive reflections of the multiple transmit signals reflected by at least one object and to generate digital signals based on the received reflections, and a controller. The controller includes a signal processor configured to generate multiple range-Doppler antenna cubes (RDACs) based on the reflections of the multiple transmit signals, each of the multiple RDACs corresponding to a respective transmitter group of the multiple transmitter groups, generate a combined range-Doppler map (RDM) by integrating the multiple RDACs, and generate object position data based on the combined RDM.

In one or more embodiments, the signal processor, to generate the multiple RDACs, is further configured to generate a first RDAC by performing range compression and Doppler compression on raw analog-to-digital converter (ADC) data representing first reflections associated with first transmit signals of a first transmitter group of the multiple transmitter groups, and generate a second RDAC by performing range compression and Doppler compression on raw ADC data representing second reflections associated with second transmit signals of a second transmitter group of the multiple transmitter groups.

In one or more embodiments, the signal processor, to generate the combined RDM by integrating the multiple RDACs, is further configured to generate the combined RDM by non-coherently integrating the multiple RDACs.

In one or more embodiments, the controller is configured to, for each transmission period in a given radar transmission frame, randomly select only one transmitter group of the multiple transmitter groups for transmission during that transmission period.

In one or more embodiments, the controller is further configured to select each transmitter group of the multiple transmitter groups for transmission in a total of $K/m$ transmission periods of the radar transmission frame, where $K$ is the total number of transmission periods in the radar transmission frame and $m$ is the total number of transmitter groups of the multiple transmitter groups.

In one or more embodiments, the controller is further configured to, in a first transmission period of the radar transmission frame, randomly select a first transmitter group of the multiple transmitter groups for transmission, and, in a second transmission period of the radar transmission frame, randomly select a second transmitter group of the multiple transmitter groups for transmission. The second transmitter group is inactive during the first transmission period and the first transmitter group is inactive during the second transmission period.

In one or more embodiments, each transmitter module of the transmitter modules of the multiple transmitter groups includes a phase rotator configured to apply a phase shift to transmit signals generated by that transmitter module based on a predefined DDM code.

In one or more embodiments, the predefined DDM code causes the phase rotator to apply the phase shift progressively in accordance with a co-prime coded (CPC) coding technique.

In one or more embodiments, for a given transmitter module of the multiple transmitter modules, the phase rotator of the given transmitter is configured to apply the phase shift to a given transmit signal, based on an index of the given transmitter module with respect to a transmitter group of the multiple transmitter groups, and a transmission period of a radar transmission frame in which the given transmit signal is to be transmitted.

In one or more embodiments, the signal processor is further configured to reduce sidelobe amplitudes of the combined RDM using coherent cancellation.

In an example embodiment, a method includes transmitting, by multiple transmitter groups of a radar system, multiple transmit signals in accordance with a Random Time Division Multiplexing (RTDM) - Doppler Domain Multiplexing (DDM) scheme, each of the multiple transmitter groups including multiple transmitter modules, receiving, by multiple receiver modules of the radar system, reflections of the multiple transmit signals reflected by at least one object, generating, by the multiple receiver modules, digital signals based on the received reflections, and generating, by a signal processor of a controller of the radar system, multiple range-Doppler antenna cubes (RDACs) based on the reflections of multiple transmit signals, each of the multiple RDACs corresponding to a respective transmitter group of the multiple transmitter groups, generating, by the signal processor, a combined RDM by integrating the multiple RDACs, and generating, by the signal processor, object position data based on the combined RDM.

In one or more embodiments, generating the multiple RDACs further includes generating, by the signal processor, a first RDAC by performing range compression and Doppler compression on raw analog-to-digital converter (ADC) data representing first reflections associated with first transmit signals of a first transmitter group of the multiple transmitter groups, and generating, by the signal processor, a second RDAC by performing range compression and Doppler compression on raw ADC data representing second reflections associated with second transmit signals of a second transmitter group of the multiple transmitter groups.

In one or more embodiments, generating the combined RDM by integrating the multiple RDACs further includes generating, by the signal processor, the combined RDM by non-coherently integrating the multiple RDACs.

In one or more embodiments, the method further includes randomly selecting, by the controller for each transmission period in a given radar transmission frame, only one transmitter group of the multiple transmitter groups for transmission during that transmission period.

In one or more embodiments, the method further includes selecting, by the controller, each transmitter group of the multiple transmitter groups for transmission in a total of K/m transmission periods of the radar transmission frame, where K is the total number of transmission periods in the radar transmission frame and m is the total number of transmitter groups of the multiple transmitter groups.

In one or more embodiments, the method further includes randomly selecting, by the controller in a first transmission period of the radar transmission frame, a first transmitter group of the multiple transmitter groups for transmission, and randomly selecting, by the controller in a second transmission period of the radar transmission frame, a second transmitter group of the multiple transmitter groups for transmission, configuring, by the controller, the second transmitter group to be inactive during the first transmission period, and configuring, by the controller, the first transmitter group to be inactive during the second transmission period.

In one or more embodiments, the method further includes applying, by a phase rotator of a transmitter module of the multiple transmitter modules, a phase shift to transmit signals generated by that transmitter module based on a predefined DDM code.

In one or more embodiments, applying the phase shift to the transmit signals includes applying, by the phase rotator, the phase shift progressively in accordance with a co-prime coded (CPC) coding technique.

In one or more embodiments, applying the phase shift to the transmit signals includes applying, by the phase rotator, a first phase shift to a first transmit signal, based on an index of the transmitter module with respect to a corresponding transmitter group of the multiple transmitter groups, and a transmission period of a radar transmission frame in which the first transmit signal is to be transmitted.

In one or more embodiments, the method further includes performing, by the signal processor, coherent cancellation to reduce sidelobe amplitudes of the combined RDM.

BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures. Elements in the figures are illustrated for simplicity and clarity and have not necessarily been drawn to scale. The figures along with the detailed description are incorporated and form part of the specification and serve to further illustrate examples, embodiments and the like, and explain various principles and advantages, in accordance with the present disclosure, wherein:

FIG. 1 is a block diagram illustrating an example radar system, in accordance with one or more embodiments;

FIG. 2 is a timing diagram illustrating a linear chirp transmission schedule for a Doppler-division multiplexing (DDM) multiple-input multiple-output (MIMO) radar system.

FIG. 3 is a diagram illustrating transmitter phase offsets over a sequence of transmission periods for two transmitter (TX) groups in accordance with a Random Time Domain Multiplexing (RTDM) - DDM MIMO transmission schedule, in accordance with one or more embodiments;

FIG. 4 is a timing diagram illustrating a linear chirp transmission schedule for three transmitters of a first TX group, such as the first TX group of the RTDM-DDM MIMO transmission schedule of FIG. 3, in accordance with one or more embodiments;

FIG. 5 is a timing diagram illustrating a linear chirp transmission schedule for three transmitters of a second TX group, such as the second TX group of the RTDM-DDM MIMO transmission schedule of FIG. 3, in accordance with one or more embodiments; and

FIG. 6. is a process flow chart describing a method of object tracking in connection with a hybrid RTDM-DDM MIMO approach, where the method may be performed by a radar system, such as the radar system of FIG. 1, in accordance with one or more embodiments.

DETAILED DESCRIPTION

The following detailed description is merely illustrative in nature and is not intended to limit the embodiments of the subject matter or the application and uses of such embodiments. Furthermore, there is no intention to be bound by any expressed or implied theory presented in the preceding technical field, background, or the following detailed description.

For simplicity and clarity of illustration, the drawing figures illustrate the general manner of construction, and descriptions and details of well-known features and techniques may be omitted for sake of brevity. Additionally, elements in the drawing figures are not necessarily drawn to scale. For example, the dimensions of some of the elements or regions in the figures may be exaggerated relative to other elements or regions to help improve understanding of embodiments described herein.

The terms "first," "second," "third," "fourth" and the like in the description and the claims, if any, may be used for distinguishing between similar elements and not necessarily for describing a particular sequential or chronological order. It is to be understood that the terms so used are interchangeable under appropriate circumstances such that the embodiments described herein are, for example, capable of operation in sequences other than those illustrated or otherwise described herein. Furthermore, the terms "comprise," "include," "have" and any variations thereof, are intended to cover non-exclusive inclusions, such that a process, method, article, or apparatus that comprises a list of elements is not necessarily limited to those elements but may include other elements not expressly listed or inherent to such process, method, article, or apparatus. The term "coupled," as used herein, is defined as directly or indirectly connected in an electrical or non-electrical manner. As used herein the terms "substantial" and "substantially" mean sufficient to accomplish the stated purpose in a practical manner and that minor imperfections, if any, are not significant for the stated purpose. As used herein, the words "exemplary" and "example" mean "serving as an example, instance, or illustration." Any implementation described herein as exemplary or an example is not necessarily to be construed as preferred or advantageous over other implementations.

Directional references such as "top," "bottom," "left," "right," "above," "below," and so forth, unless otherwise stated, are not intended to require any preferred orientation and are made with reference to the orientation of the corresponding figure or figures for purposes of illustration.

For the sake of brevity, conventional semiconductor fabrication techniques may not be described in detail herein. In addition, certain terms may also be used herein for reference only, and thus are not intended to be limiting. For instance, the terms "first", "second", and other such numerical terms referring to structures do not imply a sequence or order unless clearly indicated by the context.

Various embodiments described herein relate to hybrid Random Time Division Multiplexing (RTDM) Doppler Division Multiplexing (DDM) Multiple-Input Multiple-Output (MIMO) radar systems with integrated object tracking capabilities. Conventional DDM MIMO radar systems operate using full simultaneous transmission of all transmitters / transmit (TX) channels. However, various applications of such radar systems may not permit such operation due to limitations on peak power, power consumption constraints, heat management issues, and/or excessive overlapping of the Doppler spectrum that can occur in DDM radar systems. In contrast, conventional Time Division Multiplexing (TDM) radar systems may achieve reductions in peak power, power consumption, and heat compared to conventional DDM radar systems, but at the cost of aliased and/or ambiguous velocity measurements, typically requiring correction via phase compensation prior to angle estimation. Embodiments of the hybrid RTDM-DDM MIMO radar system described herein may exhibit advantageously lower peak power, power consumption and heat generation than conventional DDM radar systems, while mitigating velocity measurement aliasing and ambiguity (associated with conventional TDM radar systems), such that a requirement for phase compensation prior to angle estimation may be advantageously avoided. Further, embodiments of the hybrid RTDM-DDM MIMO radar system may have advantageously reduced Doppler domain spectrum overlap compared to conventional DDM radar systems. Additionally, embodiments of the hybrid RTDM-DDM MIMO radar system may have advantageously increased gain compared to conventional DDM radar systems.

In one or more embodiments, a radar system includes a microcontroller unit (MCU) having a signal processor configured to generate range-Doppler antenna cubes (RDACs) from, for example, raw ADC samples derived from return signals (i.e., reflections) corresponding to reflections of transmitted signals (e.g., chirps) transmitted via transmitter (TX) antenna elements using transmitter modules of the radar system (e.g., in accordance with a hybrid RTDM-DDM scheme having, as nonlimiting examples, a uniform pulse repetition interval (PRI) or co-prime coded (CPC) PRI). The return signals are received via receiver (RX) antenna elements of the radar system.

For example, when implementing a hybrid RTDM-DDM scheme, the radar system may assign available transmitters into two or more groups (sometimes referred to herein as "TX groups", "TX antenna groups", or "TX channel groups") and may randomly or pseudo-randomly select which TX group to use for radar signal transmission in a given transmission period. Each transmission period corresponds to one PRI, and each transmitter module of the selected TX group is configured to transmit a single radar signal (e.g., a single chirp) during a given transmission period. In one or more embodiments, only one TX group is selected for transmission in any given transmission period. The radar system may transmit radar signals in accordance with a DDM scheme in which each transmitter of a given TX group has a respectively different self-induced chirp-to-chirp phase rotation, while generally maintaining a common and constant Pulse Repetition Frequency (PRF) except during transmission periods in which the given TX group is not selected for transmission. This results in a sequence of signals being transmitted from each transmitter module of the selected group that are orthogonal in the Doppler domain, such that the return signal received from each object in the environment of the radar system is replicated at a different velocity in the Doppler domain, depending on the transmitter associated with the return signal. These replications depend on the DDM code used to define the respective phase rotations of each TX channel, and the order of the replications is required to be known in order to correctly construct the MIMO array. Finding the order of such replicas is what is herein considered to be "decoding" or "DDM decoding" and is equivalent to finding the unambiguous velocity of the target within the $\pm \frac{1}{2T_R}$ unambiguous Doppler range, where $T_R$ is the Pulse Repetition Interval (PRI). In one or more embodiments, the same DDM scheme may be used for all transmitters of the radar system, independent of TX group, and the phase rotation applied for a given TX channel based on the DDM code may be dependent on the current transmission period and an index of the given TX channel within its TX group.

For each TX group, one or more ADCs of receiver modules of the radar system may generate a respective set of raw ADC data representing the radar signals transmitted by that TX group. The signal processor of the radar system may process each set of raw ADC data separately to generate RDACs, each corresponding to a respective TX group. For example, a RDAC associated with a given TX group of the radar system may be generated by performing range compression (e.g., in the form of a fast-time Fast Fourier transform (FFT)) and Doppler compression (e.g., in the form of a slow-time FFT) on raw ADC samples representing reflections of chirps simultaneously transmitted via the associated TX group. The signal processor of the radar system may then perform non-coherent integration of the RDACs to generate a combined RDAC. The radar system may then, using the combined RDAC, perform Constant False Alarm Rate (CFAR) peak detection, DDM decoding, MIMO array construction, generation of object position data, and/or generation of object tracking data.

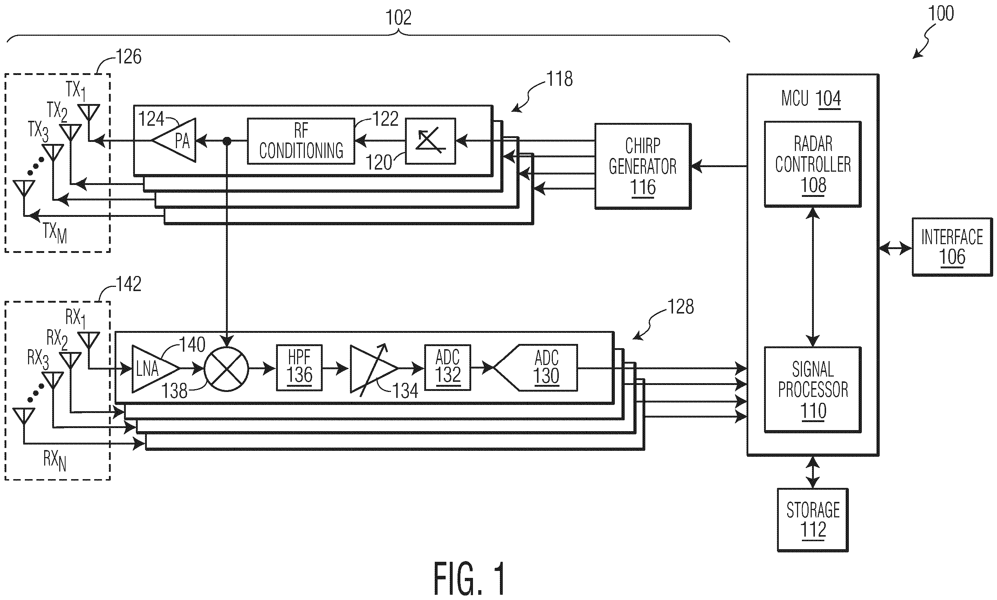

FIG. 1 shows a block diagram of a hybrid RTDM-DDM MIMO automotive radar system 100 which includes a hybrid RTDM-DDM MIMO radar device 102 connected to a radar microcontroller unit (MCU) 104. In one or more embodiments, the device 102 may be a linear frequency modulation (LFM) RTDM-DDM MIMO radar device. In one or more embodiments, the hybrid RTDM-DDM MIMO radar device 102 may be embodied as a line-replaceable unit (LRU) or modular component that is designed to be replaced quickly at an operating location. Similarly, the radar MCU 104 may be embodied as a line-replaceable unit (LRU) or modular component. Although a single or mono-static hybrid RTDM-DDM MIMO radar device 102 is shown, it will be appreciated that additional distributed radar devices may be used to form a distributed or multi-static radar. In addition, the depicted radar system 100 may be implemented in integrated circuit form with the hybrid RTDM-DDM MIMO radar device 102 and the radar MCU 104 formed with separate integrated circuits (chips) or with a single chip, depending on the application.

The radar device 102 includes one or more transmitting antenna elements 126 (sometimes referred to herein as "transmit antennas 126") and receiving antenna elements 142 (sometimes referred to herein as "receive antennas 142") connected, respectively, to one or more radiofrequency (RF) transmitter (TX) modules 118 and receiver (RX) modules 128. Each transmit antenna 126 and TX module may be associated with a respective transmitter of a group of transmitters designated herein as $TX_1$, $TX_2$, $TX_3$, ... $TX_M$, where "M" is the total number of transmitters. Herein, $TX_1$, $TX_2$, $TX_3$, ... $TX_M$ may be used interchangeably to designate corresponding transmitters or transmit (TX) channels associated with those transmitters. Each receive antenna 142 and RX module 128 may be associated with a respective receiver of a group of receivers designated herein as $RX_1$, $RX_2$, $RX_3$, ... $RX_N$, where "$N$" is the number of receivers. Herein, $RX_1$, $RX_2$, $RX_3$, ... $RX_N$ may be used interchangeably to designate corresponding receivers or receive (RX) channels associated with those receivers. As a non-limiting example, a radar device (e.g., the radar device 102) can include individual antenna elements (e.g., antenna elements 126) connected, respectively, to four transmitter modules (e.g., the transmitter modules 118) and sixteen receiver modules (e.g., the receiver modules 128). These quantities of transmitter and receiver antenna elements and modules are intended to be illustrative and not limiting, with other quantities of these elements being possible in one or more other embodiments, such as four transmitter modules 118 and six receiver modules 128, or a single transmitter module 118 and/or a single receiver module 128. The radar device 102 includes a chirp generator 116, which is configured to supply chirp input signals to the transmitter modules 118. To this end, the chirp generator 116 is configured to receive input program and control signals including, as non-limiting examples, a reference local oscillator (LO) signal, a chirp start trigger signal, and program control signal, from the MCU 104. The chirp generator 116 is configured to generate chirp signals and send the chirp signals to the transmitter modules 118 for transmission via the transmitting antenna elements 126. Herein, a transmitted chirp signal is sometimes referred to as a "transmit signal".

In one or more embodiments, each transmitter module 118 includes a phase rotator 120 (sometimes referred to herein as a "phase shifter 120") that is configured to apply phase coding (e.g., based on a DDM code) to the chirp signals, where the phase rotator 120 is controlled by program control signals generated by the MCU 104 (e.g., by the radar controller 108 of the MCU 104). The transmitter modules 118 (and, in one or more embodiments, associated TX channels and TX antennas) may be organized into different TX groups. The radar system 100 may randomly or pseudo-randomly select one such TX group for transmission during each transmission period, while the remaining unselected TX groups are configured (e.g., by the MCU 104) to be inactive or disabled. The phase rotator 120 may provide a uniform phase shift between transmitter modules 118 of a given TX group in one or more embodiments. The phase rotator 120 may alternatively provide each transmitter module 118 with the ability to implement progressive phase shifting using a non-uniform coding technique, such as a co-prime coded (CPC) coding technique, in accordance with one or more other embodiments. Each transmitter module 118 includes a RF conditioning module 122 that is configured to filter the phase-coded chirp signals. Each transmitter module 118 includes a power amplifier 124 configured to amplify the filtered, phase-coded chirp signal before they are provided to and transmitted via one or more corresponding transmitting antenna elements 126.

By using each transmit antenna 126 to transmit progressively phase shifted sequences of chirp signals, The transmit modules 118, when selected for transmission in a given transmission period, uses associated transmit antennas to transmit progressively phase shifted sequences of chirp signals, thereby operating in a Doppler Division Multiplexing fashion with other transmitter modules of the transmitter modules 118, where the transmitter modules 118 may in the same TX group be programmed to simultaneously transmit identical waveforms (e.g., chirps) on a phase-separated schedule. By randomly or pseudo-randomly selecting a single TX group of the TX groups for transmission during different transmission periods, the radar system 102 causes the transmit modules 118 to further operate in a hybrid Random Time Domain Multiplexing - Doppler Division Multiplexing fashion, at least when such TX group selection is performed randomly or pseudo-randomly and when a phase offset is applied via the phase rotator 120 of each transmit module 118 in accordance with a DDM code.

The radar signal transmitted by the transmitter antenna modules 118 may by reflected by an object in an environment of the radar device 102, and part of the reflected radar signal, sometimes referred to herein as a "return signal" or a "reflection", is received by the receiver antenna modules 128 at the radar device 102. At each receiver module 128, the received (radio frequency) antenna signal is amplified by a low noise amplifier (LNA) 140 and then fed to a mixer 138 where it is mixed with the transmitted chirp signal generated by the RF conditioning module 122. The resulting intermediate frequency signal is fed to a high-pass filter (HPF) 136. The resulting filtered signal is fed to a variable gain amplifier 134, which amplifies the signal before feeding it to a low pass filter (LPF) 132. This re-filtered signal is fed to an analog/digital converter (ADC) 130 and is output by each receiver module 128 (e.g., output to the signal processor 110 of the MCU 104) as a digital signal. In this way, the receiver modules 128 compress the target echo of various delays into multiple sinusoidal tones whose frequencies correspond to the round-trip delay of the echo.

In the radar system 100, the radar MCU 104 may be connected and configured to supply input control signals to the radar device 102 and to receive therefrom digital output signals generated by the receiver modules 128. In one or more embodiments, the radar MCU 104 includes a radar controller 108 and a signal processor 110, where either or both of which may be embodied as a microcontroller unit (MCU) or other processing unit. The radar controller 108 can receive data from the radar device 102 (e.g., from the receiver modules 128) and can control radar parameters of the radar device 102, such as frequency band, length of each radar frame, and the like. The signal processor 110 may be configured and arranged for signal processing tasks such as, but not limited to, target object identification, computation of the distance or range to a target object, computation of the radial velocity of a target object, and computation of the AoA of signals reflected by a target object, and the like. Herein, the term "AoA" or "Angle-of-Arrival" refers to the angle of a signal (e.g., a radar signal) that is reflected by an object in the environment. The signal processor 110 can provide calculated values associated with such computations to a storage 112 and/or to other systems via an interface 106.

The interface 106 can enable the MCU 104 to communicate with other systems over local and wide area networks, the internet, automotive communication buses, and/or other kinds of wired or wireless communication systems, as non-limiting examples. In one or more embodiments, the MCU 104 can provide the calculated values over the interface 106 to other systems, such as a radar-camera-lidar fusion system; an automated driving assistance system including parking, braking, or lane-change assistance features; and the like. The storage 112 can be used to store instructions for the MCU 104, received data from the radar device 102, calculated values from the signal processor 110, and the like. Storage 112 can be any suitable storage medium, such as a volatile or non-volatile memory.

To control the transmitter modules 118, the radar controller 108 may, for example, be configured to generate transmitter input signals, such as program, control trigger, reference LO signal(s), calibration signals, and/or frequency spectrum shaping signals (such as ramp generation in the case of FMCW radar). The radar controller may, for example, be configured to receive data signals, sensor signals, and/or register programming or state machine signals for RF (radio frequency) circuit enablement sequences. In one or more embodiments, the radar controller 108 may be configured to program the transmitter modules 118 with transmitter input signals to operate in a DDM fashion by progressively phase shifting the LFM chirps to be transmitted by the transmit antenna elements 126 (when selected for transmission according to the RTDM scheme).

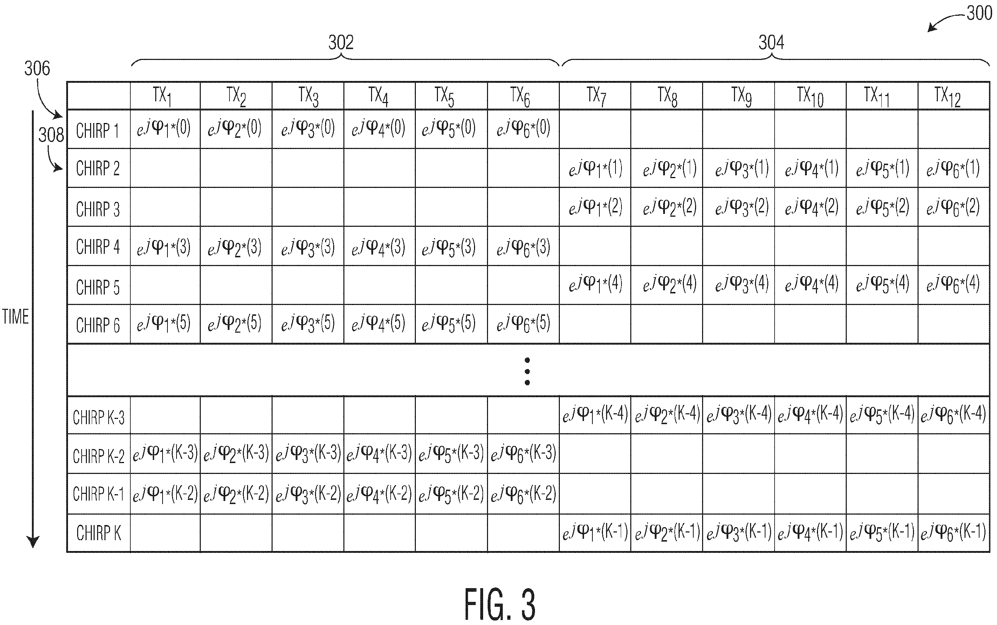

In selected embodiments, the radar controller 108 is configured to progressively phase shift the LFM chirps that are output by the chirp generator 116 with co-prime-coded (CPC) encoding by programming the programmable phase rotator 120 prior to transmission. In one or more such embodiments, each transmitter module 118 emits a transmit channel signal having a different CPC encoded LFM signal generated using a programmable slow-time phase rotator 120, such that the receiver modules 128 can condition the target object return signals (i.e., return signals corresponding to reflections of transmit signals that are transmitted via the transmit antenna elements 126, reflected off of one or more target objects, where the return signals are then received via the receive antenna elements 142) to generate digital domain signals which are processed by the radar MCU 104 to separate and identify the CPC-encoded transmit channel signals. In one or more such embodiments, the CPC encoding applied to the LFM signal of a given transmitter module 118 by its phase rotator 120 may be dependent on an index of the that transmitter module 118 in its TX group, as described in more detail below (e.g., in the example of FIG. 3).

At each receiver module 128, digital output signals are generated from target return signals for digital processing by the signal processor 110 to construct and accumulate MIMO array vector outputs forming a MIMO aperture for use in computing plots or maps for AoA estimation and target object tracks. In particular, in the signal processor 110, the digital output signals may be processed by one or more fast Fourier transform (FFT) modules or Discrete Fourier Transform (DFT) modules, such as a fast-time (range) FFT module which generates a range chirp antenna cube (RCAC) and a slow-time (Doppler) FFT module which generates a range-Doppler antenna cube (RDAC). In one or more embodiments, the signal processor 110 may be configured to process raw ADC samples representing reflections of transmit signals produced by each TX group separately, such that the signal processor 110 generates a separate RDAC for each TX group. The signal processor 110 then combines these TX-group-specific RDACs using non-coherent integration (NCI) to generate a combined range-Doppler map (RDM). Herein, an "RDM" refers to a matrix or two-dimensional array of range-Doppler cells. The signal processor 110 may further process the combined RDM by performing peak detection (e.g., using Constant False Alarm Rate (CFAR) detection) to identify amplitude peaks (in the Doppler spectrum) in the combined RDM, and applying DDM decoding techniques to associate identified peaks with corresponding transmitters and/or TX channels, thereby disambiguating the DDM MIMO waveforms represented in the combined RDM, and generating TX-associated peaks (in the Doppler spectrum). The signal processor 110 may further process the TX-associated peaks to construct a DDM MIMO array vector, which the signal processor 110 may then process to perform AoA estimation and target object tracking. The MCU 104 may then output the resulting target tracks (e.g., via the interface 106) to other automotive computing or user interfacing devices for further processing or display.

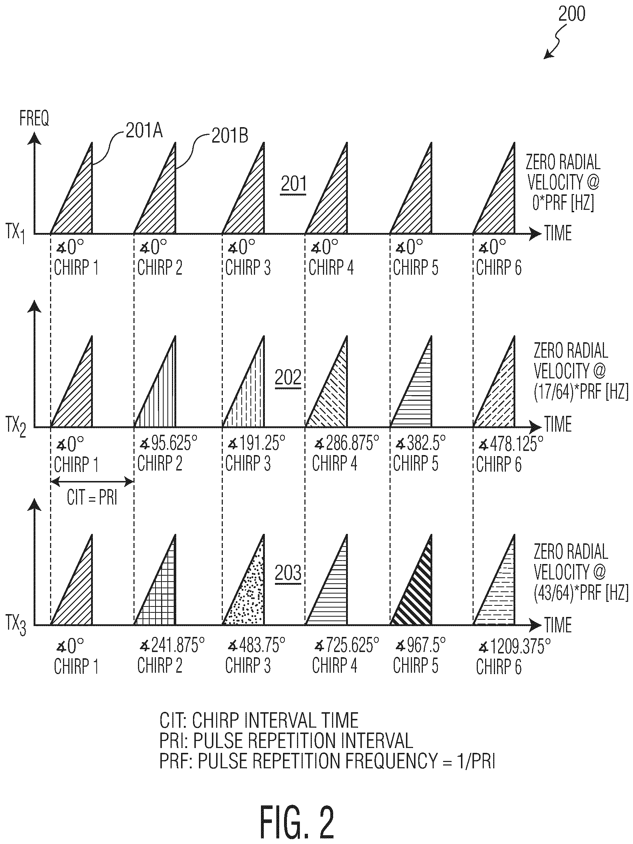

For a contextual understanding of the operation of a DDM MIMO radar system with CPC encoding, reference is now made to FIG. 2 which shows a timing diagram 200 illustrating the linear chirp transmission schedules 201, 202, 203, of three transmitters using a non-uniform Doppler Division scheme, which employs a co-prime coding (CPC). In the present example, which does not use RTDM, each transmitter $TX_1$-$TX_3$ is programmed to simultaneously transmit a sequence of DDM linear chirp waveforms in a single radar transmission frame. Each transmitter transmits a linear chirp waveform (e.g., 201A, 201B) at a fixed and uniform pulse repetition frequency (PRF) rate which is the inverse of the pulse repetition interval (e.g., $PRF=PRI^{-1}$) or chirp interval time (CIT) (e.g., $PRF=CIT^{-1}$). Herein, each PRI within a given radar transmission frame may be referred to as a "transmission period." Each of the transmitters TX1-TX3 is configured to transmit one chirp per transmission period. In addition, each transmitter encodes each chirp with an additional progressive phase offset by using the phase rotator in the front-end circuit. By using progressive phase offset CPC coding, the Doppler spectrum for the transmitters $TX_1$-$TX_3$ is effectively portioned following the co-prime number theory principle so that Doppler spectrum signals of different transmitters can be separated in a single transmission frame when individual transmitters' spectrums are heavily overlapped with each other. By encoding the DDM MIMO waveforms using co-prime based zero-radial velocity frequency spacing, individual transmitter Doppler spectrum detections can be robustly and unambiguously reconstructed to association with the correct transmitter, thereby enabling more transmitters to share the limited Doppler spectrum which is constrained by the maximum achievable PRF. As a result, each of the received chirps originating from each distinct transmitter $TX_1$-$TX_3$ effectively has a distinct zero-radial velocity Doppler shift and the individual target detections can be associated with correct originating transmitter which is necessary for the correct functioning of the subsequent MIMO virtual array construction.

In the example of FIG. 2, the differentiated CPC coding scheme is depicted with the first transmitter $TX_1$ encoding its chirp waveforms 201 with a progressive phase offset of 0 degrees, the second transmitter $TX_2$ encoding its chirp waveforms 202 with a progressive phase offset of $17/64 \times PRF=95.625$ degrees, and the third transmitter $TX_3$ encoding its chirp waveforms 503 with a progressive phase offset of $43/64 \times PRF=241.875$ degrees. As a result, the first transmitter $TX_1$ has an allocated spectrum section centered around $0 \times PRF=0$ degrees for zero radial velocity detections from the first transmitter $TX_1$. In addition, the second transmitter $TX_2$ has an allocated spectrum section centered around $17/64 \times PRF=95.625$ degrees for zero radial velocity detections from the second transmitter $TX_2$. Finally, the third transmitter $TX_3$ has an allocated spectrum section centered around $43/64 \times PRF=241.875$ degrees for zero radial velocity detections from the third transmitter $TX_3$. By encoding the individual DDM transmitters $TX_1$-$TX_3$ using co-prime based zero-radial velocity frequency spacing, the received Doppler Division MIMO waveform may be processed with CPC decoding to correctly associate individual transmitter Doppler spectrum detections with the correct transmitter. The arrangement of the zero-radial velocity resulting in spacing values of {17, 26, 21} are co-primes in PRF/64 [Hz] units.

FIG. 3 shows a diagram 300 illustrating phase offsets for a first TX group 302 and a second TX group 304 over a radar transmission frame that includes K transmission periods, in accordance with a hybrid RTDM-DDM MIMO transmission schedule. The example of FIG. 3 is described with reference to the radar system 102 of FIG. 1. However, it should be understood that this is intended to be illustrative and non-limiting, and that the timing schedule illustrated in the diagram 300 may be used for controlling transmitters in other suitable radar systems in one or more other embodiments.

While the present example illustrates a hybrid RTDM-DDM MIMO scheme that uses two TX groups, it should be understood that this is intended to be illustrative and non-limiting. For example, in one or more other embodiments, other suitable quantities of TX groups, such as three, four, or more TX groups may be used RTDM-DDM MIMO scheme, where the radar system is configured to randomly or pseudo-randomly select one of the available groups for transmission during a given transmission period of a radar transmission frame.

The first TX group 302 includes transmitters $TX_1$-$TX_6$, and the second TX group 304 includes transmitters $TX_7$-$TX1_2$, where each transmitter may be associated with a respective set of the TX modules 118 and TX antennas 126. The MCU 104 may configure each of the transmitters

(e.g., by controlling the phase rotator 120) with a respective phase offset, based on a predefined DDM code. For example, the phase offset of each chirp transmission in each transmission period is defined by the following equations:

$$phase\ offset = e^{j\varphi_i*(k)};$$

$$\varphi_i = \frac{2\pi}{2^P} * code_i$$

where i represents the index of the transmitter to which the phase offset is being applied with respect to that transmitter's TX group, k represents the transmission period (ranging from 0 to K-1 in the present example, where K is the total number of transmission periods in the radar transmission frame), P represents the number of bits of the phase rotator applying the phase offset (e.g., the phase rotator 120), and $code_i$ represents the DDM code that is predetermined to be applied for the index i.

As shown in the present example, Time Domain Multiplexing is applied between TX groups, such that only one of the TX groups 302, 304 is selected for transmission by the MCU 104 in any given transmit period. In one or more embodiments, the transmitters of the selected TX group for a given transmission period may each transmit a single LFM chirp. For example, during a first transmission period 306, the MCU 104 may select the first TX group 302 for transmission, while the second TX group 304 is configured to be inactive or disabled (e.g., by the MCU 104), in accordance with various embodiments.

Continuing the example, during a second transmission period 308, the MCU 104 may select the second TX group 304 for transmission, while the first TX group 302 is configured to be inactive or disabled (e.g., by the MCU 104), in accordance with various embodiments.

In contrast to conventional TDM approaches in which a predefined, periodic transmission schedule is set for each transmitter, the MCU 104 may determine which of the TX groups 302, 304 is selected for transmission during each transmission period randomly or pseudo-randomly. For example, given a radar transmission frame including K consecutive transmission periods transmitters of the radar system 100 are divided into $m$ TX groups (where $m = 2$ in the present example). Each TX group may include $M/m$ transmitters, where M is the total number of transmitters included in the radar system 100. While the TX groups 302, 304 are shown to include contiguous groups of transmitters in the present example, it should be understood that this is intended to be illustrative and non-limiting. For example, in one or more other embodiments, any other suitable groupings of transmitters may be used when defining the TX groups, such that a given TX group does not necessarily include a spatially contiguous group of transmitters.

Each TX group may be respectively configured to transmit during a total of ($K/m$) transmission periods (non-overlapping) of the radar transmission frame in accordance with a hybrid RTDM-DDM scheme. In one or more embodiments, MCU 104 of the radar system 100, when implementing the hybrid RTDM-DDM scheme, may randomly select the order in which the TX groups are selected for transmission over the K transmission periods of the frame, while ensuring that each TX group is respectively selected to transmit in a total of $K/m$ transmission periods. That is, each TX group is configured to transmit $K/m$ chirps in a given radar transmission frame. For example, given $m = 2$ and $K = 1024$ transmission periods in the radar transmission frame, the first TX group 302 may transmit in 512 transmission periods and the second TX group 304 may transmit in 512 transmission periods, and the order of transmission may be randomly determined by the MCU 104.

In one or more other embodiments, the MCU 104 may pseudo-randomly select the order in which the TX groups are selected for transmission over the K consecutive transmission periods of the radar transmission frame. As a non-limiting example, the MCU 104 may divide the $K$ consecutive transmission periods into a quantity, ($K/m$), of consecutive transmission period groups, where each of the transmission period groups includes $m$ consecutive transmission periods. Continuing the example, the MCU 104 may select each TX group for transmission exactly once in each transmission period group and in a random order. Such a configuration may result in each TX group being selected for transmission in no more than two consecutive transmission periods of the radar transmission frame.

Embodiments of the hybrid RTDM-DDM MIMO approach of the present example do not require simultaneous transmission using all transmitters of the radar system 100, and may exhibit advantageously lower peak power, power consumption, heat generation than conventional DDM radar systems, while mitigating velocity measurement aliasing and ambiguity (associated with conventional TDM radar systems) that would otherwise require phase compensation prior to angle estimation. Further, embodiments the present hybrid RTDM-DDM MIMO approach may have advantageously reduced Doppler domain spectrum overlap compared to conventional DDM radar systems, particularly when the total number of transmitters in the radar system is large. Additionally, embodiments of the present hybrid RTDM-DDM MIMO approach may have advantageously increased gain compared to conventional DDM radar systems.

It should be noted that one or more embodiments of present hybrid RTDM-DDM MIMO approach may produce relatively high Doppler sidelobes in the combined RDM. This increase in Doppler sidelobe amplitude can be mitigated or corrected using optimized down-sampling, coherent cancellation, and/or other suitable techniques as non-limiting examples. Such mitigation or correction techniques may be applied prior to decoding the combined RDM, in one or more embodiments. As a non-limiting example, the signal processor 110 may be configured to reduce Doppler sidelobe amplitude by reconstructing slow-time signals corresponding to strong visible targets (i.e., Doppler spectrum peaks in the RDM exceeding a predetermined threshold amplitude), then subtracting this reconstruction from the combined RDM to reveal weaker targets (i.e., Doppler spectrum peaks with comparatively lower amplitudes). This process may be repeated until a desired dynamic range is achieved, in accordance with one or more embodiments.

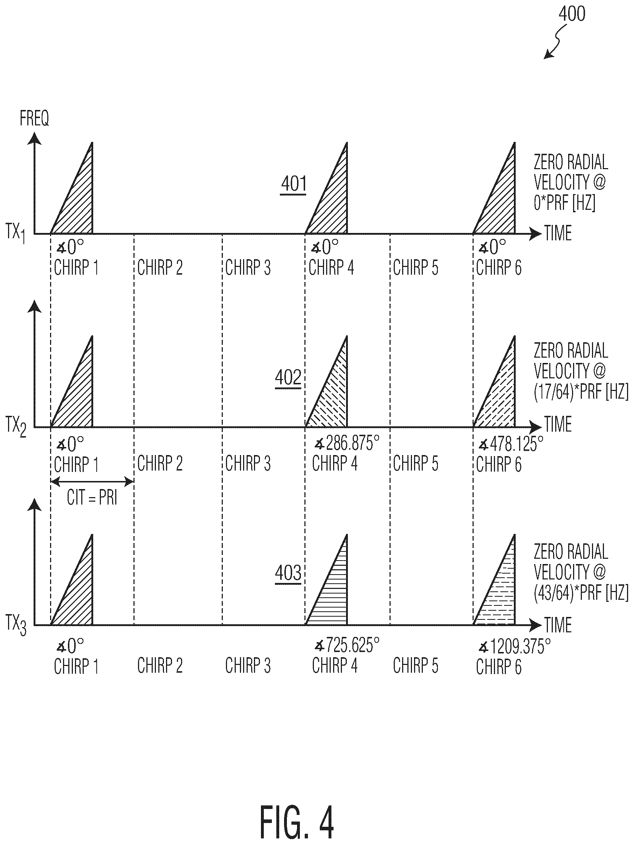

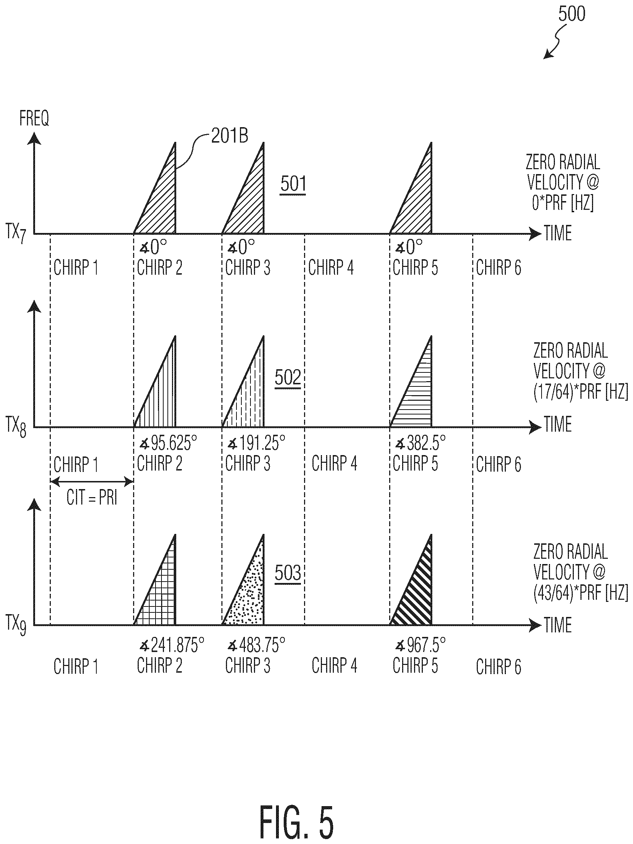

Example timing diagrams illustrating linear chirp transmission schedules of subsets of the transmitters of the first TX group 302 and the second TX group 304 are shown in FIGS. 4 and 5 respectively, in accordance with a hybrid RTDM-DDM MIMO scheme. FIGS. 4 and 5 are described together with reference to the radar system 100 of FIG. 1 and the diagram 300 of FIG. 3. For ease of comparison, the DDM scheme used when applying phase offsets to the transmitters of the first and second TX groups is similar to the DDM scheme used in the example of FIG. 2, and where some details of that DDM scheme that have already been described are not repeated here for sake of brevity.

FIG. 4 shows a timing diagram 400 illustrating linear chirp transmission schedules 401, 402, 403 of transmitters $TX_1$, $TX_2$, and $TX_3$ of the first TX group 302. FIG. 5 shows a timing diagram 500 illustrating linear chirp transmission schedules 501, 502, 503 of transmitters $TX_7$, $TX_8$, and $TX_9$ of the second TX group 304. It should be noted that each of the linear chirp transmission schedules 401, 402, 403, 501, 502, 503 are illustrated using the same time scale. As shown in FIGS. 4 and 5, the

transmitters $TX_1$, $TX_2$, and $TX_3$ are assigned indices 0, 1, and 2 in the first TX group 302, and transmitters $TX_7$, $TX_8$, and $TX_9$ are assigned indices 0, 1, and 2 in the second TX group 304. The MCU 104 may use the same DDM code when applying phase offsets to transmitters of the same index. As shown, transmitters $TX_1$ and $TX_7$ are each assigned to index 0 of their respective TX groups and are encoded with the same progressive phase offset of 0 degrees (e.g., using a DDM code $code_0$). Transmitters $TX_2$ and $TX_8$ are each assigned to index 1 of their respective TX groups and are encoded with the same progressive phase offset of 95.625 degrees (e.g., using a DDM code $code_1$). Transmitters $TX_3$ and $TX_9$ are each assigned to index 2 of their respective TX groups and are encoded with the same progressive phase offset of 241.875 degrees (e.g., using a DDM code $code_2$).

As shown in FIGS. 4 and 5, the transmission periods in which the transmitters $TX_1$, $TX_2$, and $TX_3$ of the TX group 302 are selected for transmission are non-overlapping with respect to the transmission periods in which the transmitters $TX_7$, $TX_8$, and $TX_9$ of the TX group 304 are selected for transmission. This may be due, at least in part, to the MCU 104 being configured to select a single TX group for transmission in each time period in accordance with a random or pseudorandom TDM approach, as described above.

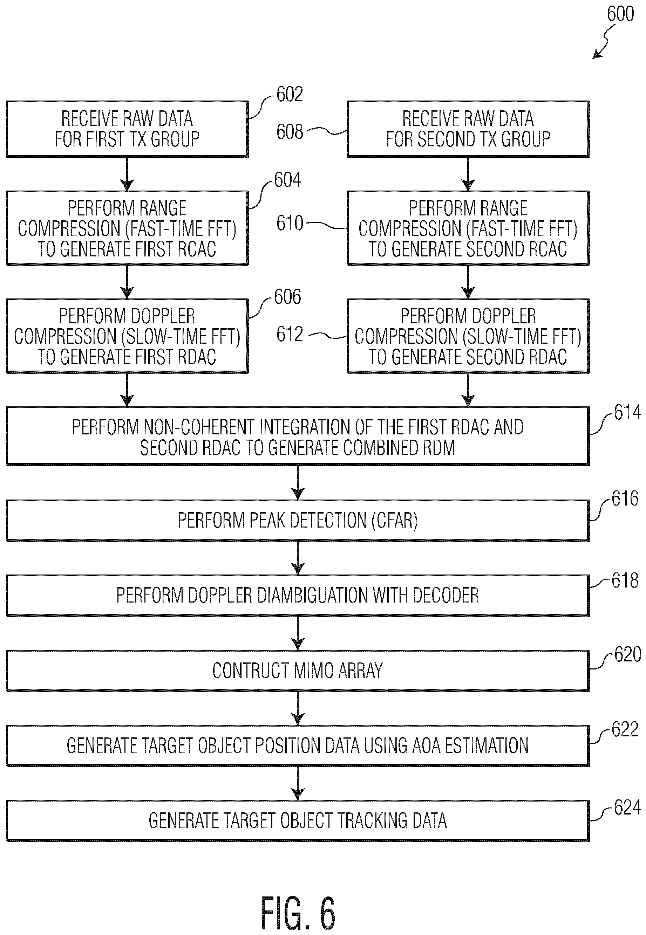

FIG. 6 shows an illustrative process flow for a method 600 by which raw data corresponding to sampled return signals corresponding to reflections of transmitted signals (e.g., chirps transmitted in accordance with a hybrid RTDM-DDM scheme, such as that shown in the diagram 300 of FIG. 3 and the timing diagrams 400 and 500 of FIGS. 4 and 5) that are reflected by target objects in an environment around a hybrid RTDM-DDM MIMO radar system. The method 600 may be performed using either or both of a radar controller and signal processor of a radar MCU, in accordance with one or more embodiments. The method 600 is described with reference to elements of the radar system 100 of FIG. 1. However, it should be understood that this is illustrative and not limiting, at least in that other suitable radar systems may be used to carry out the method 600 in one or more other embodiments.

At block 602, the signal processor 110 of the MCU 104 of the radar system 100 receives raw sample data (sometimes referred to as "ADC samples) from one or more ADCs 130 of the receiver modules 128. These ADC samples may be output by the ADCs 130 as digital signals. These ADC samples represent received signals (sometimes referred to as "reflected signals" or "return signals") corresponding to reflections of transmit signals (i.e., chirps) transmitted by a first TX group that includes a first subset of the transmitter modules 118 and the transmit antenna elements 126 (e.g., in accordance with a hybrid RTDM-DDM scheme, such as the hybrid RTDM-DDM schemes shown in the diagrams 300 and 400 of FIGS. 3 and 4), where the transmit signals are reflected off of one or more target objects in the environment of the radar system 100. The return signals are received by the receiver modules 128 via the receive antenna elements 142.

At block 604, the signal processor 110 performs range compression of the raw ADC samples associated with the second TX group by performing a fast-time FFT or DFT on the raw ADC samples. For example, the signal processor 110 may generate a first range chirp antenna cube (RCAC) associated with the first TX group as an output of this fast-time FFT or DFT.

At block 606, the signal processor 110 performs Doppler compression of the first RCAC by performing a slow-time FFT or DFT on the first RCAC. The signal processor 110 may generate a first RDAC as an output of this slow-time FFT or DFT. The first RDAC may be a three-dimensional array including a first dimension representing Doppler bins, a second dimension representing range bins, and a third dimension representing RX channels (e.g., corresponding to the number of receive antenna elements 142 or the number of receiver modules 128) represented in the RDAC. Herein, the third dimension is sometimes referred to as the "channel dimension" in the context of the RDAC and range bin matrices extracted therefrom. Each element of the first RDAC may encode complex amplitude of a received signal for a particular range bin, Doppler bin, and RX channel. In one or more embodiments, a given RX channel slice of the RDAC may be represented as a two-dimensional (2D) array of range-Doppler cells (e.g., as an RDM), with the complex amplitude of each cell corresponding to the average complex amplitude within a region bound, in Cartesian space, by corresponding pairs of iso-Doppler lines and iso-range lines. That is, the boundaries of each range bin of the first RDAC are defined by a corresponding pair of iso-range lines and the boundaries of each Doppler bin are defined by a corresponding pair of iso-Doppler lines in one or more such embodiments. Each range-Doppler cell of the first RDAC corresponds to a respective Doppler bin and range bin pair.

Because the transmitter modules 118 of the first TX group, when active during a given transmission period, transmit chirps simultaneously in a hybrid RTDM-DDM MIMO radar system, information from all TX channels associated with the first TX group is represented in each element/cell in the first RDAC. Each range bin represents ranges or distances between the radar system and a target object. Each Doppler bin represents Doppler shift values corresponding to velocities at which a target object may be traveling (e.g., relative to the ego velocity of the radar system 100). Such velocities may be calculated based on the determined Doppler shift associated with the target object.

At block 608, the signal processor 110 of the MCU 104 of the radar system 100 receives raw sample data ("ADC samples") from one or more ADCs 130 of the receiver modules 128. These ADC samples may be output by the ADCs 130 as digital signals. These ADC samples represent received signals corresponding to reflections of transmit signals (i.e., chirps) transmitted by a second TX group that includes a second subset of the transmitter modules 118 and the transmit antenna elements 126 (e.g., in accordance with a hybrid RTDM-DDM scheme, such as the hybrid RTDM-DDM schemes shown in the diagrams 300 and 500 of FIGS. 3 and 5), where the transmit signals are reflected off of one or more target objects in the environment of the radar system 100. The return signals are received by the receiver modules 128 via the receive antenna elements 142.

At block 610, the signal processor 110 performs range compression of the raw ADC samples associated with the second TX group by performing a fast-time FFT or DFT on the raw ADC samples. For example, the signal processor 110 may generate a second RCAC associated with the second TX group as an output of this fast-time FFT or DFT.

At block 612, the signal processor 110 performs Doppler compression of the second RCAC by performing a slow-time FFT or DFT on the second RCAC. The signal processor 110 may generate a second RDAC as an output of this slow-time FFT or DFT. Similar to the first RDAC generated at block 606, the second RDAC may be a three-dimensional array, with each range-Doppler cell of the second RDAC representing a range bin or iso-range line, a Doppler bin or iso-Doppler line, and receive channel or receive antenna, as described above.

Because the transmitter modules 118 of the second TX group, when active during a given transmission period, transmit chirps simultaneously in a hybrid RTDM-DDM MIMO radar system, information from all TX channels associated with the second TX group is represented in each element/cell in the second RDAC.

At block 614, the signal processor 110 performs non-coherent integration of the first RDAC and the second RDAC to generate a combined RDM. The combined RDM may represent detected reflections corresponding to transmit signals from both the first TX group and the second TX group.

While the integration of the first and second RDACs is described as non-coherent in the present example, this is intended to be illustrative and non-limiting. In one or more other embodiments, for example, the signal processor 110 may perform coherent integration of the first RDAC and the second RDAC to generate the combined RDM.

At block 616, the signal processor 110 detects peaks (i.e., Doppler spectrum peaks) of the combined RDM using a suitable peak detection technique. As a non-limiting example, the signal processor 110 may perform CFAR peak detection to identify the peaks of the combined RDM.

While in the present example, two RDACs are generated, corresponding to two TX groups, it should be understood that this is illustrative and non-limiting. In one or more other embodiments, the transmitters of the radar system 100 may be divided into $m$ TX groups, each TX group including $M/m$ transmitters, where $M$ is the total number of transmitters included in the radar system 100, and the signal processor 110 may then be configured to generate $m$ RDACs, each corresponding to a respective TX group. In one or more such embodiments, all $m$ RDACs are non-coherently integrated at block 616 to produce the combined RDM.

Each of the $m$ RDACs includes $N$ RDMs, one for each RX channel of the radar system 100. Compared to conventional DDM radar systems, which generate a single RDAC that includes total of A RDMs, given $N$ receive channels, embodiments of the present hybrid RTDM-DDM MIMO approach generate a total of $N*m$ RDMs among the $m$ RDACs, such that the non-coherently integrated combined RDM generated at block 616 may have advantageously higher gain than the single RDM generated by such conventional DDM radar systems.

At block 618, the signal processor 110 performs DDM decoding of the combined RDM based, at least in part, on the detected peaks to generate transmitter-associated peak detections (i.e., Doppler spectrum peak detections). For example, a decoder (e.g., a CPC decoder) included in or implemented by the signal processor 110 may perform Doppler disambiguation by decoding the combined RDM (i.e., to produce a decoded RDM) to associate Doppler spectrum peak detected at block 614 with a corresponding transmitter module of the transmitter modules 118.

At block 620, the signal processor 110 constructs a MIMO array (e.g., corresponding to a virtual MIMO aperture) based on the decoded RDM and the transmitter-associated peak detections using mono-static and/or bi-static radar principles. To this end, the estimated Doppler shift or radial velocity may be determined by the bin position relative to the zero-radial velocity bin of each transmitter, and receiver outputs of the same radial velocity (i.e., the same relative bin numbers) are grouped to form MIMO array outputs following a standard MIMO virtual array construction process.

At block 622, signal processor 110 generates target object position data using angle estimation based on the MIMO array. In one or more embodiments, the signal processor may generate the target object position data by performing a spatial FFT or angle FFT on the MIMO array.

At block 624, the signal processor 110 generates target object tracking data (i.e., "target tracks") based on the target object position data. In one or more embodiments, the signal processor 110 may output the resulting target tracks to other automotive computing or user interfacing devices for further processing or display (e.g., via the interface 106).

The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with) another element, and not necessarily mechanically. Thus, although the schematic shown in the figures depict one exemplary arrangement of elements, additional intervening elements, devices, features, or components may be present in one or more embodiments of the depicted subject matter.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It should also be noted that at least some of the operations for the methods described herein may be implemented using software instructions stored on a computer useable storage medium for execution by a computer. As an example, an embodiment of a computer program product includes a computer useable storage medium to store a computer readable program. The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random-access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

Alternatively, embodiments described herein may be implemented entirely in hardware or in an implementation containing both hardware and software elements. In embodiments which use software, the software may include but is not limited to firmware, resident software, microcode, etc.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

**Claims**

1. A radar system comprising:

   a plurality of transmitter groups, each comprising a plurality of transmitter modules, configured to transmit a plurality of transmit signals in accordance with a Random Time Division Multiplexing, RTDM, - Doppler Domain Multiplexing, DDM, scheme;
   a plurality of receiver modules configured to receive reflections of the plurality of transmit

   signals reflected by at least one object and to generate digital signals based on the received reflections; and
   a controller comprising:
   a signal processor configured to:

   generate a plurality of range-Doppler antenna cubes, RDACs, based on the reflections of the plurality of transmit signals, each of the plurality of RDACs corresponding to a respective transmitter group of the plurality of transmitter groups;
   generate a combined range-Doppler map, RDM, by integrating the plurality of RDACs; and
   generate object position data based on the combined RDM.

2. The radar system of claim 1, wherein the signal processor, to generate the plurality of RDACs, is further configured to:

   generate a first RDAC by performing range compression and Doppler compression on raw analog-to-digital converter (ADC) data representing first reflections associated with first transmit signals of a first transmitter group of the plurality of transmitter groups; and
   generate a second RDAC by performing range compression and Doppler compression on raw ADC data representing second reflections associated with second transmit signals of a second transmitter group of the plurality of transmitter groups.

3. The radar system of claim 1 or 2, wherein the signal processor, to generate the combined RDM by integrating the plurality of RDACs, is further configured to generate the combined RDM by non-coherently integrating the plurality of RDACs.

4. The radar system of any preceding claim, wherein the controller is configured to:
   for each transmission period in a given radar transmission frame, randomly select only one transmitter group of the plurality of transmitter groups for transmission during that transmission period.

5. The radar system of claim 4, wherein the controller is further configured to:
select each transmitter group of the plurality of transmitter groups for transmission in a total of $K/m$ transmission periods of the radar transmission frame, where $K$ is the total number of transmission periods in the radar transmission frame and $m$ is the total number of transmitter groups of the plurality of transmitter groups.

6. The radar system of claim 4 or 5, wherein the controller is further configured to:

in a first transmission period of the radar transmission frame, randomly select a first transmitter group of the plurality of transmitter groups for transmission; and
in a second transmission period of the radar transmission frame, randomly select a second transmitter group of the plurality of transmitter groups for transmission, wherein the second transmitter group is inactive during the first transmission period and the first transmitter group is inactive during the second transmission period.

7. The radar system of any of claims 4 to 6, wherein each transmitter module of the pluralities of transmitter modules of the plurality of transmitter groups includes a phase rotator configured to apply a phase shift to transmit signals generated by that transmitter module based on a predefined DDM code.

8. The radar system of claim 7, wherein the predefined DDM code causes the phase rotator to apply the phase shift progressively in accordance with a co-prime coded (CPC) coding technique.

9. The radar system of claim 7 or 8, wherein, for a given transmitter module of the plurality of transmitter modules, the phase rotator of the given transmitter is configured to apply the phase shift to a given transmit signal, based on:

an index of the given transmitter module with respect to a transmitter group of the plurality of transmitter groups, and
a transmission period of a radar transmission frame in which the given transmit signal is to be transmitted.

10. The radar system of any preceding claim, wherein the signal processor is further configured to reduce sidelobe amplitudes of the combined RDM using coherent cancellation.

11. A method comprising:

transmitting, by a plurality of transmitter groups of a radar system, a plurality of transmit signals in accordance with a Random Time Division Multiplexing (RTDM) - Doppler Domain Multiplexing (DDM) scheme, wherein each of the plurality of transmitter groups includes a plurality of transmitter modules;
receiving, by a plurality of receiver modules of the radar system, reflections of the plurality of transmit signals reflected by at least one object;
generating, by the plurality of receiver modules, digital signals based on the received reflections; and
generating, by a signal processor of a controller of the radar system, a plurality of range-Doppler antenna cubes (RDACs) based on the reflections of the plurality of transmit signals, each of the plurality of RDACs corresponding to a respective transmitter group of the plurality of transmitter groups;
generating, by the signal processor, a combined RDM by integrating the plurality of RDACs; and
generating, by the signal processor, object position data based on the combined RDM.

12. The method of claim 11, wherein generating the plurality of RDACs further comprises:

generating, by the signal processor, a first RDAC by performing range compression and Doppler compression on raw analog-to-digital converter (ADC) data representing first reflections associated with first transmit signals of a first transmitter group of the plurality of transmitter groups; and
generating, by the signal processor, a second RDAC by performing range compression and Doppler compression on raw ADC data representing second reflections associated with second transmit signals of a second transmitter group of the plurality of transmitter groups.

13. The method of claim 11 or 12, wherein generating the combined RDM by integrating the plurality of RDACs further comprises:
generating, by the signal processor, the combined RDM by non-coherently integrating the plurality of RDACs.

14. The method of any of claims 11 to 13, further comprising:
randomly selecting, by the controller for each transmission period in a given radar transmission frame, only one transmitter group of the plurality of transmitter groups for transmission during that transmission period.

15. The method of claim 14, further comprising:
selecting, by the controller, each transmitter group of the plurality of transmitter groups for transmission in a total of $K/m$ transmission periods of the radar transmission frame, where $K$ is the total number of transmission periods in the radar transmission frame and $m$ is the total number of transmitter groups of the plurality of transmitter groups.

FIG. 1

CIT: CHIRP INTERVAL TIME
PRI: PULSE REPETITION INTERVAL
PRF: PULSE REPETITION FREQUENCY = 1/PRI

FIG. 2

EP 4 538 733 A1

300

302 | 304

306

308

TIME

| | TX$_1$ | TX$_2$ | TX$_3$ | TX$_4$ | TX$_5$ | TX$_6$ | TX$_7$ | TX$_8$ | TX$_9$ | TX$_{10}$ | TX$_{11}$ | TX$_{12}$ |
|---|---|---|---|---|---|---|---|---|---|---|---|---|
| CHIRP 1 | $e^{j\varphi_1*(0)}$ | $e^{j\varphi_2*(0)}$ | $e^{j\varphi_3*(0)}$ | $e^{j\varphi_4*(0)}$ | $e^{j\varphi_5*(0)}$ | $e^{j\varphi_6*(0)}$ | | | | | | |
| CHIRP 2 | | | | | | | $e^{j\varphi_1*(1)}$ | $e^{j\varphi_2*(1)}$ | $e^{j\varphi_3*(1)}$ | $e^{j\varphi_4*(1)}$ | $e^{j\varphi_5*(1)}$ | $e^{j\varphi_6*(1)}$ |
| CHIRP 3 | | | | | | | $e^{j\varphi_1*(2)}$ | $e^{j\varphi_2*(2)}$ | $e^{j\varphi_3*(2)}$ | $e^{j\varphi_4*(2)}$ | $e^{j\varphi_5*(2)}$ | $e^{j\varphi_6*(2)}$ |
| CHIRP 4 | $e^{j\varphi_1*(3)}$ | $e^{j\varphi_2*(3)}$ | $e^{j\varphi_3*(3)}$ | $e^{j\varphi_4*(3)}$ | $e^{j\varphi_5*(3)}$ | $e^{j\varphi_6*(3)}$ | | | | | | |
| CHIRP 5 | | | | | | | $e^{j\varphi_1*(4)}$ | $e^{j\varphi_2*(4)}$ | $e^{j\varphi_3*(4)}$ | $e^{j\varphi_4*(4)}$ | $e^{j\varphi_5*(4)}$ | $e^{j\varphi_6*(4)}$ |
| CHIRP 6 | $e^{j\varphi_1*(5)}$ | $e^{j\varphi_2*(5)}$ | $e^{j\varphi_3*(5)}$ | $e^{j\varphi_4*(5)}$ | $e^{j\varphi_5*(5)}$ | $e^{j\varphi_6*(5)}$ | | | | | | |
| | | | | | $\vdots$ | | | | | | | |
| CHIRP K-3 | | | | | | | $e^{j\varphi_1*(K-4)}$ | $e^{j\varphi_2*(K-4)}$ | $e^{j\varphi_3*(K-4)}$ | $e^{j\varphi_4*(K-4)}$ | $e^{j\varphi_5*(K-4)}$ | $e^{j\varphi_6*(K-4)}$ |
| CHIRP K-2 | $e^{j\varphi_1*(K-3)}$ | $e^{j\varphi_2*(K-3)}$ | $e^{j\varphi_3*(K-3)}$ | $e^{j\varphi_4*(K-3)}$ | $e^{j\varphi_5*(K-3)}$ | $e^{j\varphi_6*(K-3)}$ | | | | | | |
| CHIRP K-1 | $e^{j\varphi_1*(K-2)}$ | $e^{j\varphi_2*(K-2)}$ | $e^{j\varphi_3*(K-2)}$ | $e^{j\varphi_4*(K-2)}$ | $e^{j\varphi_5*(K-2)}$ | $e^{j\varphi_6*(K-2)}$ | | | | | | |
| CHIRP K | | | | | | | $e^{j\varphi_1*(K-1)}$ | $e^{j\varphi_2*(K-1)}$ | $e^{j\varphi_3*(K-1)}$ | $e^{j\varphi_4*(K-1)}$ | $e^{j\varphi_5*(K-1)}$ | $e^{j\varphi_6*(K-1)}$ |

FIG. 3

FIG. 4

FIG. 5

600

RECEIVE RAW DATA
FOR FIRST TX GROUP

602

608

RECEIVE RAW DATA
FOR SECOND TX GROUP

PERFORM RANGE
COMPRESSION (FAST-TIME FFT)
TO GENERATE FIRST RCAC

604

610

PERFORM RANGE
COMPRESSION (FAST-TIME FFT)
TO GENERATE SECOND RCAC

PERFORM DOPPLER
COMPRESSION (SLOW-TIME FFT)
TO GENERATE FIRST RDAC

606

612

PERFORM DOPPLER
COMPRESSION (SLOW-TIME FFT)
TO GENERATE SECOND RDAC

PERFORM NON-COHERENT INTEGRATION OF THE FIRST RDAC AND
SECOND RDAC TO GENERATE COMBINED RDM

614

PERFORM PEAK DETECTION (CFAR)

616

PERFORM DOPPLER DIAMBIGUATION WITH DECODER

618

CONTRUCT MIMO ARRAY

620

GENERATE TARGET OBJECT POSITION DATA USING AOA ESTIMATION

622

GENERATE TARGET OBJECT TRACKING DATA

624

FIG. 6

Europäisches
Patentamt

European
Patent Office

Office européen
des brevets

# EUROPEAN SEARCH REPORT

**Application Number**

EP 24 20 3599

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/333386 A1 (PARK BYUNG KWON [KR] ET AL) 28 October 2021 (2021-10-28) | 1-15 | INV.<br>G01S7/02 |
| Y | * paragraphs [0001] - [0013], [0048] - [0052], [0054], [0059] - [0062], [0067], [0075], [0078] - [0080], [0092], [0097], [0100]; figures 1,2,5A-9 * | 1-15 | G01S7/35<br>G01S13/34<br>G01S13/931<br>G01S13/42 |
| | - - - - - | | |
| Y | US 2021/156981 A1 (STETTINER YORAM [IL] ET AL) 27 May 2021 (2021-05-27)<br>* paragraphs [0126], [0127], [0138] *<br>* paragraphs [0153], [0154]; figure 12 *<br>* paragraphs [0169], [0175], [0178] - [0181]; figures 19-22 * | 1-15 | |
| | - - - - - | | |

**TECHNICAL FIELDS SEARCHED (IPC)**

G01S

The present search report has been drawn up for all claims

| Place of search | Date of completion of the search | Examiner |
|---|---|---|
| Munich | 19 December 2024 | Schmelz, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 3599

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2024

| Patent document cited in search report | Publication date | Patent family member(s) | | Publication date |
|---|---|---|---|---|
| US 2021333386 A1 | 28-10-2021 | CN | 113567928 A | 29-10-2021 |
| | | DE | 102020111533 A1 | 28-10-2021 |
| | | US | 2021333386 A1 | 28-10-2021 |
| US 2021156981 A1 | 27-05-2021 | CN | 112088316 A | 15-12-2020 |
| | | CN | 112088317 A | 15-12-2020 |
| | | CN | 112105946 A | 18-12-2020 |
| | | EP | 3791201 A1 | 17-03-2021 |
| | | EP | 3791202 A1 | 17-03-2021 |
| | | EP | 3791203 A1 | 17-03-2021 |
| | | IL | 259190 A | 28-06-2018 |
| | | US | 2021156980 A1 | 27-05-2021 |
| | | US | 2021156981 A1 | 27-05-2021 |
| | | US | 2021156982 A1 | 27-05-2021 |
| | | WO | 2019215732 A1 | 14-11-2019 |
| | | WO | 2019215733 A1 | 14-11-2019 |
| | | WO | 2019215734 A1 | 14-11-2019 |

EPO FORM P0459

For more details about this annex : see Official Journal of the European Patent Office, No. 12/82